# EUROPÄISCHE PATENTSCHRIFT

(11) **EP 3 581 834 B1**
(45) Veröffentlichungstag und Bekanntmachung des Hinweises auf die Patenterteilung: **28.07.2021**
(21) Anmeldenummer: 19180005.1
(22) Anmeldetag: 13.06.2019
(51) Int. Cl.: F16K 47/04

(54) **LOCHKEGEL FÜR EIN STELLVENTIL**
PERFORATED PLUG FOR A CONTROL VALVE
TÊTE DE SOUPAPE PERFORÉE

(30) Priorität: 14.06.2018 DE 102018114316
(43) Veröffentlichungstag der Anmeldung: 18.12.2019
(73) Patentinhaber: Samson Aktiengesellschaft, 60314 Frankfurt am Main (DE)
(72) Erfinder: BRÄUER, Anke, 63526 Erlensee (DE)
(74) Vertreter: Köllner, Malte

(56) Entgegenhaltungen:
- WO-A1-2017/165181
- US-A- 4 375 821
- US-A- 5 014 746

## Beschreibung

### Gebiet der Erfindung

Die Erfindung betrifft die Gestaltung von Lochbildern für Verschlussteile von Stellventilen, insbesondere für hülsenförmige Verschlussteile, die auch als Lochkegel bezeichnet werden.

### Stand der Technik

Stellventile erlauben es, eine gewünschte Durchflussmenge eines gasförmigen oder flüssigen Mediums (Fluid) präzise und zuverlässig einzustellen. Sie finden als Stellglied in Regelkreisen verfahrenstechnischer Anlagen eine ihrer wichtigsten Anwendungen. Ein Stellventil besteht aus einem Gehäuse, das mindestens einen Einlass und einen Auslass für ein fluides Medium aufweist, sowie einem Ventilsitz, der die Durchflussöffnung des Ventils bildet, und einem Verschlussteil zur Steuerung der Durchflussmenge.

Es gibt verschiedene Ausführungsformen von Stellventilen. In DE 10 2016 101 547 A1 wurde ein Stellventil beschrieben, beim dem die Steuerung der Durchflussmenge mithilfe eines hülsenförmigen Verschlussteils bzw. Lochkegels erfolgt. Der Lochkegel wird dabei in einem Ring geführt und weist Öffnungen in seinem Mantel auf. Das zugehörige Lochbild ist in zwei Bereiche unterteilt, wobei sich im ersten Teil kleine Öffnungen befinden und im zweiten Teil große Öffnungen. Beim Herausziehen des Lochkegels aus der Absperrposition, d.h. der Position, bei der das Ventil vollständig geschlossen ist, werden zunächst die kleinen Öffnungen für den Durchfluss des fluiden Mediums freigegeben. Die Durchflussmenge ist in diesen Ventilstellungen stark begrenzt. Die Öffnungen sind zudem in Reihen angeordnet, die horizontal zur Achse des Lochkegels orientiert sind. Dadurch steigt die Durchflussmenge, wenn gerade eine Reihe freigegeben wird, und bleibt nahezu unverändert, wenn keine Reihe freigegeben wird. Ein derart ungleichmäßiger Anstieg stellt für viele verfahrenstechnische Anwendungen ein Problem dar, bei denen die Durchflussmenge in einem breiten Bereich, d.h. von kleinen bis hin zu großen Durchflussmengen, zuverlässig eingestellt werden muss.

Beim weiteren Herausziehen des Lochkegels kann das fluide Medium ab einer bestimmten Position durch die großen Öffnungen strömen. Die Durchflussmenge erhöht sich an diesem Punkt noch ungleichmäßiger als durch die horizontale Anordnung der Reihen. Dieser Punkt markiert außerdem den Übergang zu einem Bereich, in dem die Durchflussmenge linear von der Position des Lochkegels abhängt. Für viele Anwendungen ist jedoch ein gleichprozentiger Zusammenhang nach der Norm DIN EN 60534-2-4:2009-2011 wünschenswert.

In DE 10 2015 016 902 A1 wird ein Stellventil beschrieben, bei dem Öffnungen im Mantel eines röhrenförmigen Ventilsitzes integriert sind. Das zugehörige Lochbild besteht - wie beim vorhergehenden Ausführungsbeispiel - aus einem Bereich mit kleinen und einem Bereich mit großen Öffnungen. Zusätzlich gibt es Ausgleichskanäle, die den Übergang zwischen beiden Bereichen gleichmäßiger gestalten. Das Lochbild im Bereich der kleinen Öffnungen weist darüber hinaus horizontale Reihen auf. Dies führt - wie bereits beschrieben - zu Ungleichmäßigkeiten in der Durchflusskennlinie. Außerdem ändert sich das Lochbild innerhalb der beiden Bereiche nur geringfügig, d.h. bei einer Änderung der Ventilstellung in diesen Bereichen wird immer die gleiche Fläche für den Durchfluss des fluiden Mediums freigegeben. Dies führt zu einem nahezu linearen Zusammenhang zwischen Durchflussmenge und Ventilstellung und kann gegebenenfalls stark von einem gleichprozentigen Verhalten abweichen.

Ein Stellventil bei dem das verwendete Lochbild keine horizontalen Reihen aufweist wurde in DE 31 01 494 A1 bzw. US 4,375,821 A1 offenbart. Der zugehörige Lochkegel wird in einem Ring geführt, ist hülsenförmig geformt und besitzt Löcher auf seiner Mantelfläche. Die Löcher sind dabei entlang einer Schraubenlinie angeordnet. Beim Herausziehen des Kegels werden die Löcher nacheinander freigegeben, womit sich eine wesentlich gleichmäßigere Durchflusskennlinie ergibt als bei horizontal angeordneten Reihen. Allerdings sind die Abstände der Öffnungen relativ groß, so dass die maximal mögliche Durchflussmenge nicht erreicht wird. Zudem wird bei Anheben des Lochkegels um einen Schritt meistens die gleiche zusätzliche Fläche für den Durchfluss des Mediums freigegeben, so dass sich wieder eine lineare Durchflusskennlinie ergibt und keine gleichprozentige.

Ein ähnliches Lochbild zeigt sich im Ventilsitz des Stellventils, das in WO 2017/165181 A1 beschrieben wurde. Dabei sind die Löcher auf deutlich mehr als einer Schraubenlinie angeordnet. Zusätzlich sind sie in vertikalen Reihen ausgerichtet und berühren sich. Das regelmäßige Lochbild führt ebenfalls zu einer nahezu linearen Durchflusskennlinie, die von einer gleichprozentigen Durchflusskennlinie stark abweichen kann. Außerdem kommt das Berühren der Löcher für viele Anwendungen nicht in Frage, in denen z.B. Gefahrstoffe wie Sauerstoff verwendet werden. Hier muss ein Mindestabstand zwischen den Löchern eingehalten werden, so dass aus Gründen der mechanischen Stabilität der Steg zwischen den Löchern eine bestimmte Breite nicht unterschreiten darf.

In der US 5 014 746 A wird die Kombination eines regelmäßigen Lochbildes kreisrunder Öffnungen in einem ersten Bereich eines Ventilkäfigs mit großen fensterartigen Öffnungen in einem zweiten Bereich des Ventilkäfigs beschrieben. Die kreisrunden Öffnungen sind ähnlich zu dem in der WO 2017/165181 A1 beschriebenen Lochbild auf mehreren Schraubenlinien geführt, berühren sich aber nicht. Demnach weist das Lochbild in diesem ersten Bereich Eigenschaften auf, die denen des Lochbildes der WO 2017/165181 A1 sehr ähnlich sind. Der Übergang zu den fensterartigen Öffnungen ist vergleichbar mit dem Übergang wie er in der DE 10 s2016 101 547 A1 bzw. der DE 10 2015 016 902 A1 beschrieben ist.

### Aufgabe

Aufgabe der Erfindung ist es, Lochbilder für hülsenförmige Lochkegel von Stellventilen anzugeben, die sowohl den Umgang mit Gefahrstoffen wie Sauerstoff als auch eine zuverlässige Bedienung des Ventils bei kleinen wie auch großen Durchflussmengen ermöglichen.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zur Herstellung eines Lochkegels für ein Stellventil vorgeschlagen, wobei der Lochkegel hülsenförmig ist und Öffnungen in seinem Mantel aufweist. Die Öffnungen werden dabei auf mindestens einer Schraubenlinie um den Mantel des Lochkegels angeordnet, um eine möglichst gleichmäßige Durchflusskennlinie des Stellventils zu erhalten. Dies ermöglicht eine einfache und zuverlässige Steuerung der Durchflussmenge.

Die Öffnungen und die Schraubenlinien werden derart angeordnet, dass das Verhältnis der maximalen Stegbreite und der minimalen Stegbreite zwischen benachbarten Öffnungen größer als oder gleich 1 und kleiner als oder gleich 1,5 ist. Diese Bedingung stellt sicher, dass die Öffnungen möglichst dicht beieinander liegen und die maximal mögliche Durchflussmenge erreicht wird. So kann die Baugröße des Ventilsitzes auf ein Minimum reduziert werden und das Stellventil bei hohen Drücken zuverlässig und sicher betrieben werden.

Um die Gleichmäßigkeit der Durchflusskennlinie weiter zu erhöhen, wird die Anzahl der Schraubenlinien unter Berücksichtigung der zuvor beschriebenen Bedingung an die Stegbreiten, den technischen Vorgaben und Sicherheitsbestimmungen so gering wie möglich gehalten. Dazu gehören der Innendurchmesser des Lochkegels, der Durchmesser der Öffnungen und die minimale Stegbreite zwischen benachbarten Öffnungen. Dies ermöglicht einerseits den Betrieb mit Gefahrstoffen und bietet andererseits die Möglichkeit, technische Aspekte bei der Produktion von Stellventilen zu berücksichtigen, so dass die Herstellung der Lochkegel einfach und kostengünstig durchgeführt werden kann.

Typischerweise führt eine regelmäßige Anordnung der Startpunkte der Schraubenlinien zum besten Ergebnis, nämlich zur geringsten Steigung der Schraubenlinien und zu einer möglichst gleichmäßigen Anordnung der Öffnungen.

Das beschriebene Lochbild ist sehr regelmäßig und erzeugt eine nahezu lineare Durchflusskennlinie. Bei der Herstellung des Lochkegels werden deshalb Öffnungen ausgelassen, um einen gleichprozentigen Verlauf der Durchflusskennlinie zu erzeugen. Dieser Verlauf kann z.B. auf die Vorgaben und betrieblichen Eigenschaften des Regelkreises abgestimmt werden, in dem das Stellventil eingesetzt wird. Das Auslassen von Öffnungen stellt dabei eine sehr einfache und kostengünstige Methode dar, die Durchflusskennlinie eines Stellventils an einen gleichprozentigen Verlauf anzupassen. in vielen Anwendungen ist ein gleichprozentiger Verlauf nach der Norm DIN EN 60534-2-4:2009-2011 wünschenswert. Dies erhöht insbesondere die Genauigkeit der Regelung nahe der Absperrposition des Stellventils.

Die Anordnung der Öffnungen auf Schraubenlinien ermöglicht einen gleichmäßigen Anstieg der Durchflussmenge mit der Ventilstellung. Die Gleichmäßigkeit ist bei kleineren Steigungen der Schraubenlinien stärker ausgeprägt. Dies legt die Verwendung einer einzelnen Schraubenlinie nahe. Dies steht jedoch oft im Widerspruch zu den vorgegebenen technischen Randbedingungen und erlaubt in vielen Fällen keine weiteren Optimierungsmöglichkeiten bzgl. der maximal möglichen Durchflussmenge. Die Verwendung von zwei oder mehr Schraubenlinien ist deshalb in vielen Fällen günstiger.

Die Zahl der Schraubenlinien kann jedoch nicht beliebig erhöht werden ohne die Gleichmäßigkeit der Durchflusskennlinie zu gefährden. Mit der Zahl der Schraubenlinien wächst notwendigerweise deren Steigung. Dies führt im Grenzfall zu einer Anordnung der Öffnungen auf horizontalen bzw. vertikalen Reihen und entsprechenden Schwankungen in der Durchflussmenge, wenn eine Reihe freigegeben wird oder keine Reihe freigegeben werden kann. Eine Beschränkung auf maximal 20 Schraubenlinien kann deshalb sinnvoll sein.

In vielen Fällen bietet es sich an, die Öffnungen gleichmäßig entlang der Schraubenlinien zu verteilen. Dies erhöht zum einen die Gleichmäßigkeit der Durchflusskennlinie und erlaubt zum anderen eine möglichst dichte Anordnung der Öffnungen bzw. eine Erhöhung der Durchflussmenge.

Letzteres gilt insbesondere, wenn die Öffnungen äquidistant auf den Schraubenlinien angeordnet werden.

Neben der Anordnung der Öffnungen kann deren Form ebenfalls in den Optimierungsprozess eingebunden werden. Dabei können kreisrunde Öffnungen durch Bohrungen vergleichsweise einfach hergestellt werden. Ein weiterer Vorteil kreisrunder Öffnungen besteht in ihrer mechanischen Stabilität. In Fällen, bei denen die Durchflussmenge im Vordergrund steht, bieten sich andere Formen an. Mithilfe von quadratischen, recht- und sechseckigen Formen kann die Fläche der Öffnungen vergrößert und gleichzeitig eine minimale Stegbreite eingehalten werden. Sternförmige Formen können sinnvoll sein, um Fremdkörper zurückzuhalten, die sich im fluiden Medium befinden können und einen gewissen Radius überschreiten.

Die Anzahl der Schraubenlinien kann zum Beispiel mithilfe eines iterativen Verfahrens bestimmt werden. Dabei kann zunächst eine Anordnung der Öffnungen auf N=2 Schraubenlinien mit einer minimalen Höhe h = π D tan(a) gewählt werden, wobei die Höhe h die Höhe der Schraubenlinien nach einem vollständigen Umlauf um die Innenwand des Lochkegels bezeichnet und der Winkel α durch sin(a) = N cos(30°) ( d + s ) / ( π D ), den Innendurchmesser D des Lochkegels, den Durchmesser d der Öffnungen und die minimale Stegbreite s zwischen den Öffnungen bestimmt ist. Die Anzahl der Öffnungen auf jeder Schraubenlinie ist zunächst durch den ganzzahligen Wert des Verhältnisses π D / ( d + s ) gegeben. Sie wird schrittweise erhöht, bis die Orthogonatprojektion der Position einer Öffnung auf die nächstliegende Schraubenlinie in den Zwischenbereich zweier benachbarter Öffnungen fällt, d.h. der Abstand der Projektion zu den Positionen der Öffnungen beträgt mindestens 30% des Abstands der Öffnungen. Anschließend wird überprüft, ob die Stegbreiten den vorgegebenen Mindestwert einhalten und das maximale Verhältnis zweier Stegbreiten zwischen benachbarten Öffnungen größer als oder gleich 1 und kleiner als oder gleich 1,5 ist. Ist das nicht der Fall, wird die Anzahl der Schraubenlinien erhöht und die soeben beschriebenen Schritte wiederholt. Auf diese Weise kann die Anzahl der Schraubenlinien, die eine möglichst dichte Anordnung der Öffnungen ermöglicht, ermittelt werden. Das Verfahren ist flexibel und passt sich automatisch an die vorgegebenen Randbedingungen an.

In typischen Anwendungen wird ferner die maximale Gesamtfläche der Öffnungen als Randbedingung vorgegeben.

Die Öffnungen, die bei der Herstellung des Lochkegels zur Anpassung an einen gewünschten Verlauf ausgelassen werden, können mithilfe eines schleifenartigen Verfahrens bestimmt werden. Für einen gleichprozentigen Zusammenhang zwischen Durchflussmenge und Ventilstellung wird zuerst ein volles Lochbild entsprechend dem oben beschriebenen Verfahren bestimmt. Im nächsten Schritt wird die Gesamtzahl der Öffnungen bestimmt, die ausgelassen werden sollen. Dazu wird die Zahl der Öffnungen bestimmt, die notwendig ist, um eine vorgegebene maximale Gesamtfläche der Öffnungen zu erhalten. Diese Zahl wird von der maximal möglichen Anzahl der Öffnungen abgezogen, die im vollen Lochbild enthalten sind. Mithilfe dieser Differenz r wird nun in einer Schleife, die bei der N-ten Schraubenlinie beginnt und bei der ersten Schraubenlinie endet, die Zahl der Öffnungen bestimmt, die auf den einzelnen Schraubenlinien ausgelassen werden sollen. Dazu wird im ersten Schritt i=N gewählt wird und der ganzzahlige Wert des Verhältnisses 3 r / ( 2 i - 2 ) bestimmt, der zusätzlich um 1 erniedrigt wird. Anschließend wird r um diesen Wert erniedrigt und die Prozedur für die nächste Schraubenlinie wiederholt. Dabei wird sichergestellt, dass die Zahl der auszulassenden Öffnungen weder zunehmen kann noch größer als die Gesamtzahl r ist.

Die Aufgabe wird ferner gelöst durch einen Lochkegel für ein Stellventil, der erhalten wurde durch das beschriebene Verfahren.

Die Aufgabe wird ferner gelöst durch einen Lochkegel für ein Stellventil, der die weiter oben geschilderten Eigenschaften aufweist.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: ein Stellventil mit einem hülsenförmigen Lochkegel;
- Fig. 2: eine schematische Darstellung eines hülsenförmigen Lochkegels mit einer Vorstufe eines erfindungsgemäßen Lochbildes, bei dem der Schritt des Auslassens von Öffnungen noch nicht ausgeführt wurde;
- Fig. 3: eine schematische Darstellung eines hülsenförmigen Lochkegels mit erfindungsgemäßem Lochbild, bei dem Öffnungen ausgelassen sind;
- Fig. 4: einen Ablaufplan des Verfahrens, mit dem ein erfindungsgemäßer Lochkegel hergestellt werden kann;
- Fig. 5: einen Ablaufplan des Verfahrens, mit dem ein erfindungsgemäßes Lochbild hergestellt werden kann; und
- Fig. 6: einen Ablaufplan des Verfahrens, mit dem Öffnungen ermittelt werden, die bei der Herstellung des Lochkegels ausgelassen werden.

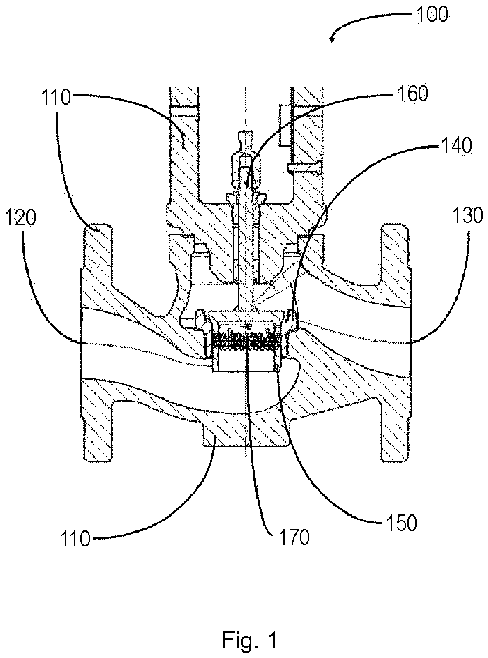

Fig. 1 zeigt ein Stellventil 100, das aus einem Ventilgehäuse 110, einem Einlass 120, einem Auslass 130 und einem Ventilsitz 140 besteht. Im Ventilsitz 140 wird ein hülsenförmiger Lochkegel 150 mithilfe einer Ventilstange 160 geführt. Der Lochkegel 150 ist in der Abbildung in der Absperrposition gezeigt, d.h. einer Position, in der der Lochkegel 150 die Durchlassöffnung, die durch den Ventilsitz 140 definiert wird, vollständig verschließt. Der Lochkegel 150 weist Öffnungen 170 auf. Beim Herausziehen des Lochkegels 150 aus dem Ventilsitz 140 werden die Öffnungen 170 nach und nach für den Durchfluss des fluiden Mediums freigegeben. Auf diese Weise kann die Durchflussmenge eines fluiden Mediums durch das Stellventil 100 kontrolliert werden.

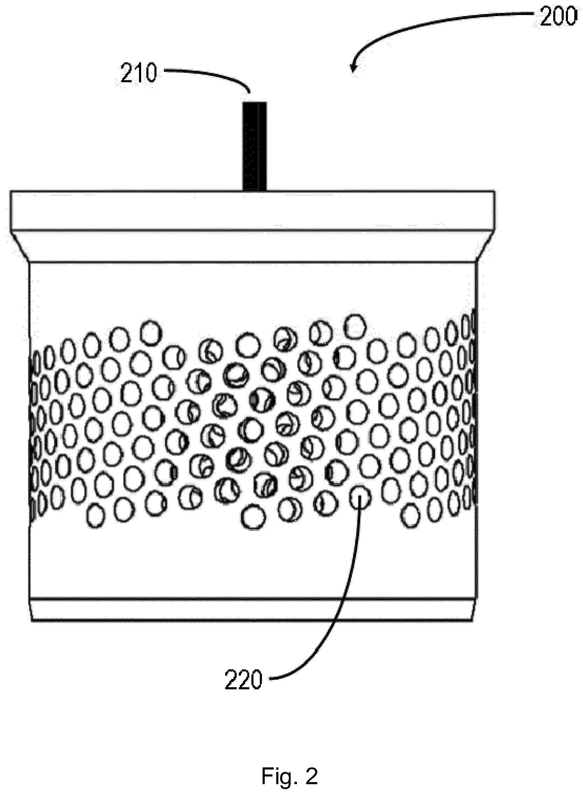

Fig. 2 zeigt einen hülsenförmigen Lochkegel 200 mit einer Halterung 210. Mithilfe der Halterung 210 kann der Lochkegel 150 fest mit der Ventilstange 160 des Stellventils 100 verbunden werden. Der Lochkegel 200 weist kreisrunde Öffnungen 220 auf, die auf der Mantelfläche des Lochkegels 200 liegen. Die Öffnungen 220 sind auf Schraubenlinien angeordnet und so gegeneinander versetzt, dass eine dichteste Anordnung der Öffnungen 220 entsteht. Damit steht die maximale Gesamtfläche für den Durchfluss des fluiden Mediums zur Verfügung, die unter Berücksichtigung der Form und Größe der Öffnungen 220 und der vorgegebenen minimalen Stegbreite erreicht werden kann. Da sich das Lochbild entlang des Lochkegels 200 nur wenig ändert, erzeugt er eine nahezu lineare Durchflusskennlinie. Lediglich nahe der Absperrposition oder in Ventilstellungen, die einem maximal geöffneten Ventil entsprechen, können signifikante Abweichungen von einem linearen Verhalten der Durchflussmenge mit der Ventilstellung entstehen. Das Lochbild des Lochkegels 200 stellt eine Vorstufe eines erfindungsgemäßen Lochbildes dar, bei dem der Schritt des Auslassens von Öffnungen noch nicht ausgeführt wurde.

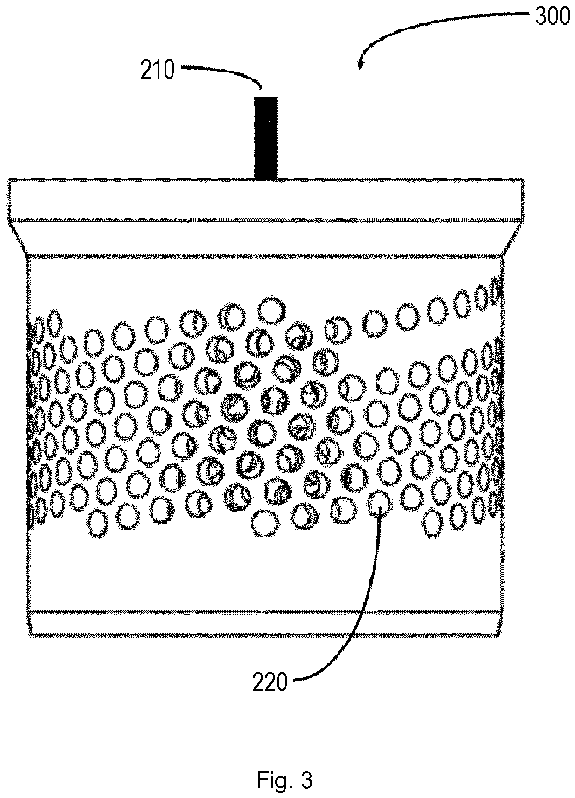

Der Lochkegel 300, der in Fig. 3 abgebildet ist, erzeugt eine gleichprozentige Durchflusskennlinie. Dazu wurde das Lochbild von Lochkegel 200 verwendet und Öffnungen 220 ermittelt, die bei der Herstellung des Lochkegels 300 ausgelassen wurden.

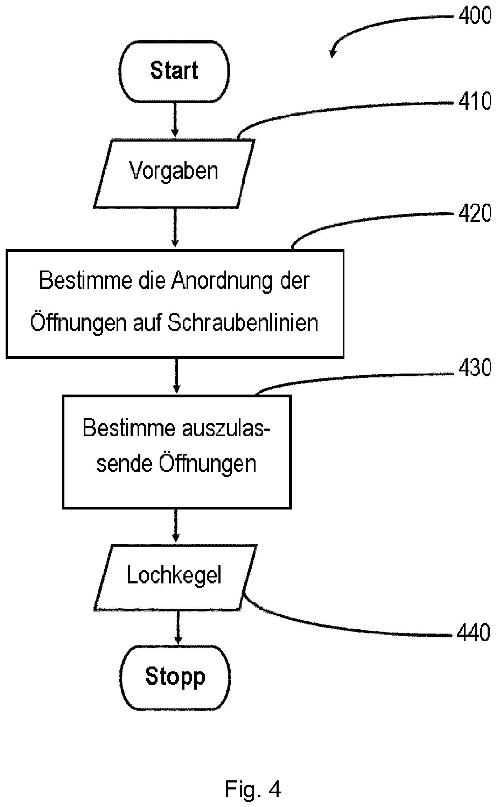

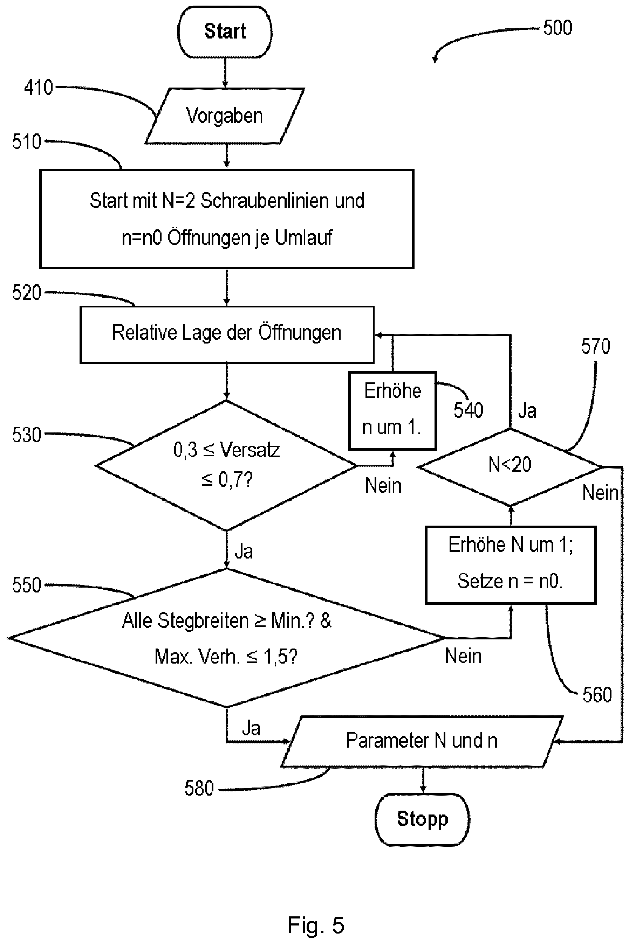

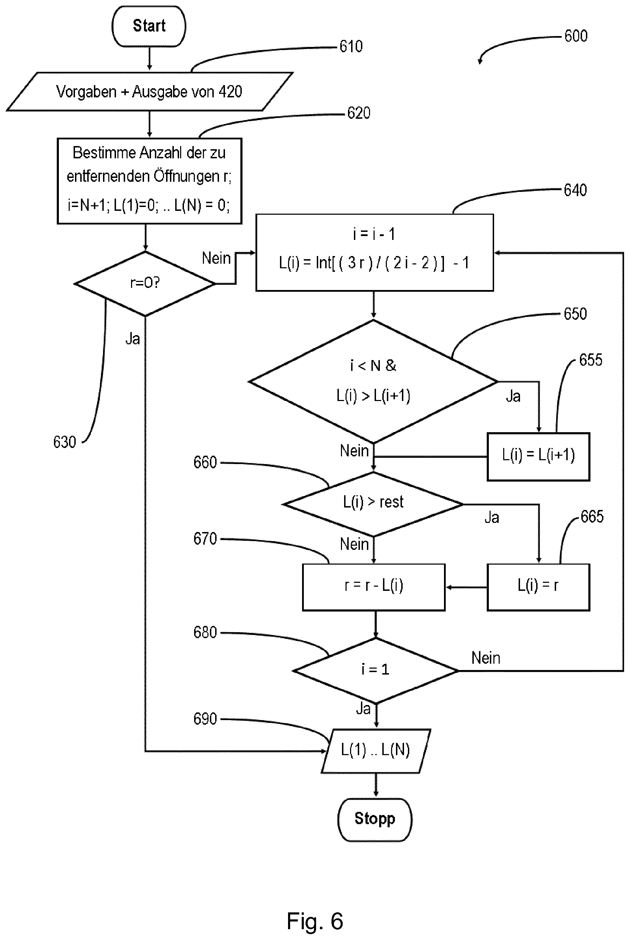

Fig. 4 zeigt den groben Ablauf eines Verfahrens 400 zur Herstellung eines erfindungsgemäßen Lochkegels. Der Innendurchmesser und die Höhe des Lochkegels, die Größe der Öffnungen und die Gesamtfläche aller Öffnungen sowie die minimale Stegbreite zwischen benachbarten Öffnungen stellen dabei Vorgaben dar, die in Schritt 410 - z.B. mithilfe einer Eingabemaske - eingelesen werden. In Schritt 420 werden die Parameter für eine Anordnung der Öffnungen auf Schraubenlinien bestimmt. Dazu kann ein iteratives Verfahren verwendet werden, das im Zusammenhang mit Fig. 5 näher beschrieben wird. Das in 420 erzeugte Lochbild ist hinsichtlich der vorgegebenen Randbedingungen, der Gleichmäßigkeit der Durchflusskennlinie und der Durchflussmenge optimiert. Die resultierende Durchflusskennlinie ist nahezu linear. Sie kann in Schritt 430 an einen anderen Verlauf angepasst werden, wobei Öffnungen ermittelt werden, die schließlich beim Herstellungsprozess 440 ausgelassen werden können. Ein detailliertes Verfahren zur Ermittlung solcher Öffnungen wird im Zusammenhang mit Fig. 6 beschrieben.

Fig. 5 stellt den Ablaufplan eines beispielhaften Verfahrens 500 zur Bestimmung 420 der Parameter dar, die die Anzahl und den Verlauf der Schraubenlinien und die Anordnung von Öffnungen 220 auf den Schraubenlinien definieren. Dazu werden zunächst die Eingaben aus dem Schritt 410 übernommen und in Schritt 510 in ein Lochbild mit N = 2 Schraubenlinien umgesetzt. Die Startpunkte der Schraubenlinien sind dabei so gewählt, dass sie gleichmäßig auf dem Umfang des Lochkegelmantels verteilt sind. Die Höhe h der Schraubenlinien nach einem vollständigen Umlauf um die Innenwand des Lochkegels ist durch h = π D tan(a) gegeben, wobei der Winkel α durch sin(a) = N cos(30°) ( d + s ) / ( π D ), den Innendurchmesser D des Lochkegels, den Durchmesser d der Öffnungen 220 und die minimale Stegbreite s zwischen den Öffnungen 220 bestimmt wird. Die Öffnungen 220 werden zudem äquidistant auf den Schraubenlinien angeordnet, wobei jedem Startpunkt einer Schraubenlinie eine Öffnung 220 zugewiesen wird. Die Anzahl n der Öffnungen 220, die pro Umlauf auf einer Schraubenlinie liegen, ist dabei zunächst durch einen Wert n0 gegeben, der dem ganzzahligen Wert (Abrundung) des Verhältnisses π D / ( d + s ) entspricht. In Schritt 530 wird nun die Position einer der Öffnungen 220 mittels Orthogonalprojektion auf eine benachbarte Schraubenlinie abgebildet und die Abstände vom Fußpunkt der Projektion zu den beiden Öffnungen ermittelt, die dem Fußpunkt entlang der Schraubenlinie am nächsten liegen. Ist einer dieser Abstände kleiner als 30% des Abstands der beiden benachbarter Öffnungen, wird in Schritt 540 n um 1 erhöht und das Verfahren bei Schritt 530 fortgesetzt. Liegt die Abbildung des Punktes nicht zu nahe an den Öffnungen, wird in Schritt 550 überprüft ob alle sich ergebenden Stegbreiten größer als oder gleich der minimalen Stegbreite s sind und das maximale Verhältnis, das mit zwei Stegbreiten zwischen benachbarten Öffnungen gebildet werden kann, größer als oder gleich 1 und kleiner als oder gleich 1,5 ist. Ist das nicht der Fall wird in Schritt 560 die Anzahl der Schraubenlinien um 1 erhöht und n auf n0 zurückgesetzt. Anschließend wird in Schritt 570 geprüft, ob N<20. Ist das der Fall, wird das Verfahren bei Schritt 530 fortgesetzt. In allen anderen Fällen wird in Schritt 580 die Zahl der Schraubenlinien N und die Anzahl n der Öffnungen 220 ausgegeben.

Fig. 6 zeigt den Ablaufplan für ein schleifenartiges Verfahren 600 zur Ermittlung der Öffnungen, die bei der Herstellung eines Lochkegels ausgelassen werden können, um eine gleichprozentige Durchflusskennlinie eines Stellventils 100 zu erzeugen. Das Verfahren übernimmt in Schritt 610 die Vorgaben aus dem Schritt 410 und die Parameter aus dem Schritt 580. In Schritt 620 werden mithilfe dieser Daten zunächst zwei Zahlen bestimmt: 1.) die maximal mögliche Anzahl an Öffnungen, die in horizontalen Reihen um den Mantel des Kegels geführt werden können und 2.) die Anzahl der Öffnungen, die benötigt wird, um die geforderte Gesamtfläche für den Durchfluss des fluiden Mediums zu erhalten. Die Differenz dieser Zahlen gibt die Anzahl r der auszulassenden Öffnungen an. Zusätzlich wird eine Zählvariable i initialisiert und auf den Wert N+1 gesetzt. Außerdem wird ein Array an Zahlen L(1) bis L(N+1) definiert, deren Werte zunächst auf 0 gesetzt werden. In Schritt 630 wird zunächst überprüft, ob es auszulassende Öffnungen gibt und das Verfahren mit einer entsprechenden Ausgabe abgebrochen. Ist r>0, wird in Schritt 640 r um den Wert L(i) und die Zählvariable i um 1 erniedrigt und L(i) der ganzzahlige Wert des Verhältnisses 3r/(2i-2) zugeordnet, wobei zusätzlich die Zahl 1 abgezogen wird. In den Schritten 650 und 655 wird nun überprüft, ob die Zahl L(i) größer als L(i+1) ist und gegebenenfalls auf den kleineren Wert gesetzt, es sei denn, die Schleife wurde gerade erst gestartet. Ähnlich wird in den Schritten 660 und 665 verfahren, wobei überprüft wird, ob L(i) größer r ist. In Schritt 670 wird die Zahl r um L(i) reduziert. Ist die Zählvariable gleich 1, wird das Verfahren im Schritt 680 zur Ausgabe 690 der Zahlen L(1) bis L(N) geführt und anschließend beendet. Andernfalls wird das Verfahren mit dem Schritt 640 fortgesetzt. Bei der anschließenden Herstellung des Lochkegels in Schritt 440 werden die ersten L(i) Öffnungen in der i-ten Schraubenlinie ausgelassen.

### Glossar

### benachbarte Öffnungen

Als benachbarte Öffnungen zu einer betrachteten Öffnung werden die sechs Öffnungen mit den kleinsten Stegbreiten zu der betrachteten Öffnung bezeichnet. Sofern sich die maximale Stegbreite innerhalb der Menge der benachbarten Öffnungen nicht ändert, können zu den benachbarten Öffnungen auch mehr als sechs, z.B. acht, Öffnungen zählen.

### Durchflusskennlinie

Die Durchflusskennlinie eines Stellventils beschreibt den funktionellen Zusammenhang zwischen der Stellung des Reglers - z.B. der Hubstellung eines Verschlussteils - und der aus der Stellung des Reglers resultierenden Durchflussmenge.

### Durchflussmenge

Als Durchflussmenge bezeichnet man die Menge eines fluiden Mediums, das sich in einer bestimmten Zeiteinheit durch einen bestimmten Querschnitt bewegt. Die Menge des Mediums kann dabei als Stoffmenge angegeben sein. Aus messtechnischen Gründen wird sie jedoch in vielen Fällen in einer Volumen- oder Masseneinheit angegeben.

### Gleichprozentige Durchflusskennlinie

Ein Stellventil weist eine gleichprozentige Durchflusskennlinie auf, wenn eine Veränderung der Regelstellung immer zu derselben prozentualen Änderung der Durchflussmenge führt. Demnach entspricht ein gleichprozentiger Verlauf der Durchflusskennlinie einem exponentiellen Verlauf. Der Begriff ist in durch die Norm DIN EN 60534-2-4:2009-2011 definiert, wobei der Gültigkeitsbereich des gleichprozentigen Zusammenhangs auf messbare Änderungen eingeschränkt ist, d.h. der sich ergebende exponentielle Zusammenhang muss lediglich im Bereich von 20% bis 100% des vollständig geöffneten Ventils gewährleistet sein. Bei Regelstellungen unterhalb von 20% kann die Durchflussmenge vom gleichprozentigen Zusammenhang abweichen, insbesondere wenn das Verschlussteil das Ventil vollständig schließt.

### Hülse

Eine Hülse besteht aus einem Rohr, das auf einer Seite offen und auf der anderen Seite durch einen Boden oder Deckel abgeschlossen ist.

### Lineare Durchflusskennlinie

Ein Ventil weist eine lineare Durchflusskennlinie auf, wenn eine Veränderung der Regelstellung um eine vorgegeben Höhe immer zu derselben Änderung der Durchflussmenge führt, d.h. zu derselben Änderung der Stoffmenge, des Volumens oder der Masse.

### Lochbild oder Lochmuster

Ein Lochbild oder Lochmuster bezeichnet die geometrische Anordnung von Öffnungen bzw. Löchern auf einer Fläche. Lochbilder werden zum Beispiel zur Beschreibung von Lochblechen, Lochplatten, Lochziegeln oder Lochkegeln verwendet.

### Lochkegel

Lochkegel sind hülsenförmige Verschlussteile von Stellventilen. Sie weisen Öffnungen in ihrem rohrförmigen Mantel auf, die von einem Fluid durchströmt werden können.

### Schraubenlinie

Eine Schraubenlinie oder Helix ist eine Kurve mit konstanter Steigung, die sich um den Mantel eines Zylinders windet.

### Stegbreite

Als Stegbreite wird der minimale Abstand zwischen den Rändern benachbarter Öffnungen bezeichnet.

### Stellventil

Stellventile, auch Prozess- oder Regelventile genannt, dienen zur Drosselung bzw. Regelung fluidischer Ströme. In einer Durchflussöffnung eines Ventilsitzes wird zu diesem Zweck ein Verschlussteil mittels eines Antriebs bewegt. Dadurch kann die Durchflussöffnung freigegeben oder abgeschlossen werden, wodurch die Durchflussmenge verändert wird, bis hin zum vollständigen Verschließen der Durchflussöffnung. Typischerweise wird hierzu ein pneumatischer oder elektrischer Antrieb verwendet.

### Bezugszeichen

- 100: Stellventil mit einem hülsenförmigen Lochkegel
- 110: Ventilgehäuse
- 120: Einlass
- 130: Auslass
- 140: ringförmiger Ventilsitz
- 150: hülsenförmiger Lochkegel
- 160: Ventilstange
- 170: Öffnungen im Mantel des Lochkegels 150

- 200: Lochkegel mit einer Vorstufe eines erfindungsgemäßen Lochbildes
- 210: Halterung
- 220: kreisrunde Öffnung

- 300: Lochkegel mit einem erfindungsgemäßen Lochbild, bei dem Öffnungen 220 ausgelassen sind

- 400: Schematische Darstellung eines Verfahrens zur Herstellung eines erfindungsgemäßen Lochkegels
- 410: Eingabe der vorgegebenen technischen Parameter und Randbedingungen
- 420: Bestimmung der Parameter für die Schraubenlinien und die Anordnung der Öffnungen auf den Schraubenlinien
- 430: Ermittlung der Öffnungen, die ausgelassen werden sollen
- 440: Herstellen des Lochkegels mit dem in den Schritten 420 und 430 ermittelten Lochbild

- 500: Ablaufplan eines beispielhaften Verfahrens zur Bestimmung 420 der Parameter für die Schraubenlinien und die Anordnung von Öffnungen 220 auf den Schraubenlinien
- 510: Aufbau eines Lochbilds mit zwei Schraubenlinien und n0 Öffnungen 220
- 520: Bestimmung der relativen Lage der Öffnungen 220 auf den Schraubenlinien
- 530: Abfrage, ob die relative Lage der Öffnungen 220 erfindungsgemäß ist
- 540: Erhöhung der Anzahl der Öffnungen 220 auf einer Schraubenlinie um 1, falls die Abfrage in 530 negativ verlief
- 550: Abfrage, ob die Stegbreiten die geforderten Randbedingungen erfüllen
- 560: Erhöhung der Anzahl der Schraubenlinien um 1, falls die Abfrage in 550 negativ verlief
- 570: Abfrage, ob die Anzahl der Schraubenlinien größer als 20 ist
- 580: Ausgabe der ermittelten Parameter

- 600: Ablaufplan eines Beispielverfahrens zur Ermittlung 430 von Öffnungen, die bei der Herstellung eines erfindungsgemäßen Lochkegels ausgelassen werden können
- 610: Eingabe der vorgegebenen technischen Parameter und Randbedingungen und Übernahme der in 580 ausgegebenen Parameter
- 620: Bestimmung der Gesamtzahl der zu entfernenden Öffnungen
- 630: Abfrage, ob keine Öffnungen zu entfernen sind
- 640: Bestimmung der Anzahl der Öffnungen, die in der i-ten Schraubenlinie zu entfernen sind
- 650: Abfrage, ob die Anzahl der zu entfernenden Öffnungen größer geworden ist
- 655: Setze die Anzahl der zu entfernenden Öffnungen auf den vorhergehenden Wert, falls die Abfrage in 650 positiv verlief
- 660: Abfrage, ob die Anzahl der zu entfernenden Öffnungen größer als die verbliebene Gesamtzahl ist
- 665: Setze die Anzahl der zu entfernenden Öffnungen auf den vorhergehenden Wert, falls die Abfrage in 660 positiv verlief
- 670: Reduktion der Gesamtzahl zu entfernender Öffnungen
- 680: Abfrage, ob alle Schraubenlinien betrachtet wurden
- 690: Ausgabe der Zahlen, die die zu entfernenden Öffnungen je Schraubenlinie angeben

### zitierte Literatur

zitierte Patentliteratur
DE 10 2016 101 547 A1
DE 10 2015 016 902 A1
WO 2017/165181 A1
DE 31 01 494 A1
DE 24 16 064 A1
US 4,375,821 A1
US 5 014 746 A
zitierte Nicht-Patentliteratur
Die DIN-Norm DIN EN 60534-2-4:2009-2011

## Patentansprüche

1. Verfahren zum Herstellen (440) eines Lochkegels (150; 200; 300) für ein Stellventil (100),
wobei das Stellventil (100) den Durchfluss eines Fluids steuern kann;
1.1 wobei der Lochkegel (150; 200; 300) hülsenförmig ist und
1.2 Öffnungen (170; 220) in seinem Mantel aufweist, durch die das Fluid strömen kann;
1.3 wobei die Öffnungen (170; 220) auf mindestens einer Schraubenlinie auf dem Mantel des Lochkegels (150; 200; 300) angeordnet werden;
1.4 wobei die Öffnungen (170; 220) und die Schraubenlinien derart angeordnet werden,
1.4.1 dass das Verhältnis der maximalen Stegbreite und der minimalen Stegbreite zwischen benachbarten Öffnungen (170; 220) größer als oder gleich 1 und kleiner als oder gleich 1,5 ist;
1.4.2 dass diejenige Anordnung der Öffnungen (170; 220) und Schraubenlinien gewählt wird, bei der die Anzahl an Schraubenlinien minimiert wird;
1.5 wobei folgende Randbedingungen vorgegeben werden:
1.5.1 ein vorgegebener Innen-Durchmesser des Lochkegels (150; 200; 300);
1.5.2 ein vorgegebener Durchmesser der Öffnungen (170; 220);
1.5.3 eine vorgegebene minimale Stegbreite zwischen den Öffnungen (170; 220);
1.6 wobei Öffnungen (170; 220) ermittelt werden, die bei der Herstellung (440) auszulassen sind, damit der Lochkegel (150; 200; 300) einen gleichprozentigen Verlauf der Durchflusskennlinie des Stellventils (100) erzeugt;
1.7 Herstellen (440) eines Lochkegels (150; 200; 300) mit den solcherart ermittelten Öffnungen (170; 220) auf der mindestens einen Schraubenlinie.

2. Verfahren nach einem der vorhergehenden Ansprüche,
**dadurch gekennzeichnet,**
**dass** die Öffnungen (170; 220) auf mindestens zwei Schraubenlinien angeordnet sind.

3. Verfahren nach einem der vorhergehenden Ansprüche,
**dadurch gekennzeichnet,**
**dass** die Öffnungen (170; 220) auf höchstens 20 Schraubenlinien angeordnet sind.

4. Verfahren nach einem der vorhergehenden Ansprüche,
**dadurch gekennzeichnet,**
**dass** die Öffnungen (170; 220) entlang einer Schraubenlinie gleichmäßig angeordnet sind.

5. Verfahren nach dem vorhergehenden Anspruch,
**dadurch gekennzeichnet,**
**dass** die Öffnungen (170; 220) entlang einer Schraubenlinie äquidistant angeordnet sind.

6. Verfahren nach einem der vorhergehenden Ansprüche,
**dadurch gekennzeichnet,**
**dass** die Öffnungen (170; 220)
6.1 kreisrund; und/oder
6.2 quadratisch; und/oder
6.3 rechteckig; und/oder
6.4 sechseckig; und/oder
6.5 sternförmig sind.

7. Verfahren nach einem der vorhergehenden Ansprüche,
**dadurch gekennzeichnet,**
**dass** die Anzahl der Schraubenlinien mithilfe eines iterativen Verfahrens (500) bestimmt wird;
7.1 wobei die Öffnungen (220) zunächst auf N=2 Schraubenlinien mit einer minimalen Höhe h = π D tan(a) verteilt werden,
7.2 wobei sin(a) = N cos(30°) ( d + s ) / (π D ),
7.2.1 D den Innendurchmesser des Lochkegels (150; 200; 300) bezeichnet,
7.2.2 d den Durchmesser der Öffnungen (220),
7.2.3 s die minimale Stegbreite zwischen den Öffnungen (220) und
7.2.4 h die Höhe der Schraubenlinien nach einem vollständigen Umlauf um die Innenwand des Lochkegels;
7.3 wobei die Anzahl der Öffnungen (220) auf jeder Schraubenlinie zunächst durch den ganzzahligen Wert des Verhältnisses π D / ( d + s ) gegeben ist und
7.4 anschließend inkrementell erhöht wird,
7.5 bis die Orthogonalprojektion der Position einer Öffnung auf einer der Schraubenlinien auf die nächstliegende Schraubenlinie in den Zwischenbereich zweier benachbarter Öffnungen (220) fällt;
7.5.1 wobei der Zwischenbereich dadurch definiert ist, dass der Abstand der Projektion zu den Öffnungen (220) mindestens 30% des Abstands der Öffnungen (220) beträgt;
7.6 wobei anschließend die Anzahl der Schraubenlinien N inkrementell erhöht wird,
7.6.1 falls die Stegbreiten den vorgegebenen Mindestwert nicht einhalten oder
7.6.2 das maximale Verhältnis zweier Stegbreiten zwischen benachbarten Öffnungen größer als 1,5 ist, und
7.6.3 die Schritte 7.3 bis 7.6 solange wiederholt werden, bis die Stegbreiten den Mindestwert einhalten und das maximale Verhältnis größer als oder gleich 1 und kleiner als oder gleich 1,5 ist.

8. Verfahren nach einem der vorhergehenden Ansprüche,
**dadurch gekennzeichnet,**
**dass** zusätzlich die maximale Gesamtfläche der Öffnungen (170; 220) als Randbedingung vorgegeben wird.

9. Verfahren nach Anspruch 7,
**dadurch gekennzeichnet,**
**dass** die auszulassenden Öffnungen (170; 220) auf den Schraubenlinien um den Mantel des Lochkegels (150; 200; 300) mithilfe eines schleifenartigen Verfahrens (600) bestimmt werden;
9.1 wobei die maximal mögliche Anzahl der Öffnungen (170; 220) um den Lochkegel (150, 200, 300) entsprechend Anspruch 7 bestimmt wird;
9.2 wobei im nächsten Schritt die Gesamtzahl der Öffnungen (170; 220) bestimmt wird, die ausgelassen werden sollen;
9.2.1 wobei die Zahl der Öffnungen (170; 220) bestimmt wird, die notwendig ist, um eine vorgegebene maximale Gesamtfläche der Öffnungen (170; 220) zu erhalten; und
9.2.2 wobei diese Zahl von der maximal möglichen Anzahl der Öffnungen (170; 220) um den Lochkegel (150, 200, 300), die entsprechend Anspruch 7 bestimmt wurde, abgezogen wird;
9.3 wobei mithilfe dieser Differenz r nun in einer Schleife, die bei der N-ten Schraubenlinie beginnt und bei der ersten Schraubenlinie endet, die Zahl der Öffnungen (170; 220) bestimmt wird, die auf den einzelnen Schraubenlinien ausgelassen werden sollen, wobei
9.3.1 im ersten Schritt einer Zählvariablen i der Wert N zugewiesen wird und
9.3.2 der ganzzahlige Wert des Verhältnisses 3 r / ( 2 i - 2 ) bestimmt wird, der zusätzlich um 1 erniedrigt wird, und
9.3.3 anschließend r um diesen Wert erniedrigt wird und
9.3.4 die Prozedur für die nächste Schraubenlinie wiederholt wird, wobei sichergestellt wird,
9.3.4.1 dass die Zahl der auszulassenden Öffnungen (170; 220) weder zunimmt
9.3.4.2 noch größer als r ist.

10. Lochkegel (150; 200; 300) für ein Stellventil (100), erhalten durch das Verfahren nach einem der Ansprüche 1 bis 9.

11. Lochkegel (150; 200; 300) für ein Stellventil (100),
wobei das Stellventil (100) den Durchfluss eines Fluids steuern kann;
11.1 wobei der Lochkegel (150; 200; 300) hülsenförmig ist und
11.2 Öffnungen (170; 220) in seinem Mantel aufweist, durch die das Fluid strömen kann;
11.3 wobei die Öffnungen (170; 220) auf mindestens einer Schraubenlinie auf dem Mantel des Lochkegels (150; 200; 300) angeordnet sind;
11.4 wobei die Öffnungen (170; 220) und die Schraubenlinien derart angeordnet sind
11.4.1 dass das Verhältnis der maximalen Stegbreite und der minimalen Stegbreite zwischen benachbarten Öffnungen (170; 220) größer als oder gleich 1 und kleiner als oder gleich 1,5 ist;
11.4.2 dass der Lochkegel (150; 200; 300) die minimale Anzahl an Schraubenlinien aufweist, die die vorstehende Bedingung erfüllt;
11.5 wobei der Lochkegel (150; 200; 300) derart ausgebildet ist, dass er zusätzlich die folgenden Randbedingungen einhält:
11.5.1 einen vorgegebenen Innen-Durchmesser des Lochkegels (150; 200; 300);
11.5.2 einen vorgegebenen Durchmesser der Öffnungen (170; 220);
11.5.3 eine minimale Stegbreite zwischen den Öffnungen (170; 220);
11.6 wobei Öffnungen (170; 220) ausgelassen sind, wodurch der Lochkegel (150; 200; 300) einen gleichprozentigen Verlauf der Durchflusskennlinie des Stellventils (100) erzeugt.

## Claims

1. Method for manufacturing (440) a perforated plug (150; 200; 300) for a control valve (100),
the control valve (100) being capable of controlling the flow of a fluid;
1.1 wherein the perforated plug (150; 200; 300) is cup-shaped and
1.2 has openings (170; 220) in its lateral wall through which the fluid is able to flow;
1.3 wherein the openings (170; 220) are arranged on at least one helical line on the lateral wall of the perforated plug (150; 200; 300);
1.4 wherein the openings (170; 220) and the helical lines are arranged such
1.4.1 that the ratio between the maximum web width and the minimum web width between adjacent openings (170; 220) is greater than or equal to 1 and less than or equal to 1.5;
1.4.2 that the arrangement of openings (170; 220) and helical lines is chosen in which the number of helical lines is minimized;
1.5 wherein the following boundary conditions are given:
1.5.1 a predefined inner diameter of the perforated plug (150; 200; 300);
1.5.2 a predefined diameter of the openings (170; 220);
1.5.3 a predefined minimum web width between the openings (170; 220);
1.6 wherein openings (170; 220) are determined before manufacture (440) of the perforated plug (150; 200; 300) that are to be omitted during the manufacture (440) such that the perforated plug (150; 200; 300) exhibits an equal percentage course of the flow characteristic of the control valve (100);
1.7 manufacture (440) of a perforated plug (150; 200; 300) with the thus determined openings (170; 220) on at least one helical line.

2. Method according to any one of the preceding claims,
**characterized in that**
the openings (170; 220) are arranged on at least two helical lines.

3. Method according to any one of the preceding claims,
**characterized in that**
the openings (170; 220) are arranged on at most 20 helical lines.

4. Method according to any one of the preceding claims,
**characterized in that**
the openings (170; 220) are uniformly arranged along a helical line.

5. Method according to the preceding claim,
**characterized in that**
the openings (170; 220) are arranged equidistantly along a helical line.

6. Method according to any one of the preceding claims,
**characterized in that**
the openings (170; 220) are
6.1 circular; and/or
6.2 square; and/or
6.3 rectangular; and/or
6.4 hexagonal; and/or
6.5 star-shaped.

7. Method according to any one of the preceding claims,
**characterized in that**
the number of helical lines is determined using an iterative method (500);
7.1 wherein the openings (220) are first distributed on N=2 helical lines with a minimum height h = π D tan(α),
7.2 where sin(a) = N cos(30°) ( d + s) / ( π D),
7.2.1 D is the inner diameter of the perforated plug (150; 200; 300),
7.2.2 d is the diameter of the openings (220) and
7.2.3 s is the minimum web width between the openings (220);
7.2.4 h is the height of the helical lines after one complete revolution around the inner wall of the perforated plug;
7.3 wherein the number of openings (220) on each helical line is first given by the integer value of the ratio π D / ( d + s ) and
7.4 then incrementally increased,
7.5 until the orthogonal projection of the position of one opening on one of the helical lines onto the nearest helical line falls into the intermediate region of two adjacent openings (220);
7.5.1 wherein the intermediate region is defined **in that** the distance of the projection to the openings (220) is at least 30% of the distance between the openings (220);
7.6 wherein the number of helical lines N is increased,
7.6.1 if the web widths do not comply with the specified minimum value or
7.6.2 the maximum ratio of two web widths between adjacent openings is greater than 1.5, and
7.6.3 steps 7.3 to 7.6 are repeated until the web widths comply with the minimum value and the maximum ratio is greater than or equal to 1 and less than or equal to 1.5.

8. Method according to any one of the preceding claims,
**characterized in that**
the maximum total area of the openings (170; 220) is additionally predefined as a boundary condition.

9. Method according to claim 7,
**characterized in that**
the openings (170; 220) to be omitted on the helical lines around the lateral wall of the perforated plug (150; 200; 300) are determined by means of a loop-like method (600);
9.1 wherein the maximum possible number of openings (170; 220) around the perforated plug (150, 200, 300) is determined according to claim 7;
9.2 wherein, as the next step, the total number of openings (170; 220) to be omitted is determined;
9.2.1 wherein the number of openings (170; 220) is determined that is necessary to obtain a predefined maximum total area of the openings (170; 220); and
9.2.2 wherein this number is subtracted from the maximum possible number of openings (170; 220) around the perforated plug (150, 200, 300) that is determined according to claim 7;
9.3 wherein this difference r is used to determine the number of openings (170; 220) to be omitted on each helical line in a loop starting at the Nth helical line and ending at the first helical line, where
9.3.1 the value N is assigned to a counting variable i in the first step and
9.3.2 the integer value of the ratio 3 r / ( 2 i - 2 ) is determined and additionally reduced by 1, and
9.3.3 r is subsequently lowered by this value, and
9.3.4 the procedure is repeated for the next helical line, making sure that
9.3.4.1 the number of openings (170; 220) to be omitted does neither increase nor
9.3.4.2 becomes greater than r.

10. Perforated plug (150; 200; 300) for a control valve (100) obtained by the method according to any one of the claims 1 to 9.

11. Perforated plug (150; 200; 300) for a control valve (100),
the control valve (100) being capable of controlling the flow of a fluid;
11.1 wherein the perforated plug (150; 200; 300) is cup-shaped and
11.2 has openings (170; 220) in its lateral wall through which the fluid is able to flow;
11.3 wherein the openings (170; 220) are arranged on at least one helical line on the lateral wall of the perforated plug (150; 200; 300);
11.4 wherein the openings (170; 220) and the helical lines are arranged such
11.4.1 that the ratio between the maximum web width and the minimum web width between adjacent openings (170; 220) is greater than or equal to 1 and less than or equal to 1.5;
11.4.2 that the perforated plug (150; 200; 300) has the minimum number of helical lines sat-isfying the latter condition;
11.5 wherein the perforated plug (150; 200; 300) is configured such that it additionally complies with the following boundary conditions:
11.5.1 a predefined inner diameter of the perforated plug (150; 200; 300);
11.5.2 a predefined diameter of the openings (170; 220);
11.5.3 a minimum web width between the openings (170; 220);
11.6 wherein openings (170; 220) are omitted ausgelassen such that the perforated plug (150; 200; 300) exhibits an equal percentage course of the flow characteristic of the control valve (100).

## Revendications

1. Procédé de fabrication (440) d'un obturateur perforé (150 ; 200 ; 300) pour une vanne de régulation (100),
dans lequel la vanne de régulation (100) est capable de commander l'écoulement d'un fluide ;
1.1 dans lequel l'obturateur perforé (150 ; 200 ; 300) est en forme de manchon et
1.2 ayant des ouvertures (170 ; 220) dans son enveloppe à travers lesquelles le fluide peut s'écouler ;
1.3 dans lequel les ouvertures (170 ; 220) sont disposées sur au moins une ligne hélicoïdale sur l'enveloppe de l'obturateur perforé (150 ; 200 ; 300) ;
1.4 dans lequel lesdites ouvertures (170 ; 220) et lesdites lignes hélicoïdales sont disposées de telle sorte,
1.4.1 que le rapport entre la largeur maximale de la traverse et la largeur minimale de la traverse entre les ouvertures adjacentes (170 ; 220) est supérieur ou égal à 1 et inférieur ou égal à 1,5 ;
1.4.2 en ce que la disposition des ouvertures (170 ; 220) et des lignes hélicoïdales est choisie de manière à minimiser le nombre de lignes hélicoïdales ;
1.5 où les conditions aux limites suivantes sont données :
1.5.1 un diamètre intérieur prédéterminé de l'obturateur perforé (150 ; 200 ; 300) ;
1.5.2 un diamètre prédéterminé des ouvertures (170 ; 220) ;
1.5.3 une largeur de traverse minimale prédéterminée entre les ouvertures (170 ; 220) ;
1.6 dans lequel on détermine les ouvertures (170 ; 220) qui doivent être omises lors de la fabrication (440) de sorte que l'obturateur perforé (150 ; 200 ; 300) produise un parcours à pourcentage égal de la courbe caractéristique d'écoulement de la vanne de régulation (100) ;
1.7 produire (440) un obturateur perforé (150 ; 200 ; 300) avec les ouvertures (170 ; 220) ainsi déterminées sur la au moins une ligne hélicoïdale.

2. Procédé selon une des revendications précédentes,
**caractérisé en ce**
**que** les ouvertures (170 ; 220) sont disposées sur au moins deux lignes hélicoïdales.

3. Procédé selon une des revendications précédentes,
**caractérisé en ce**
**que** les ouvertures (170 ; 220) sont disposées sur au plus 20 lignes hélicoïdales.

4. Procédé selon une des revendications précédentes,
**caractérisé en ce**
**que** les ouvertures (170 ; 220) sont disposées uniformément le long d'une ligne hélicoïdale.

5. Procédé selon la revendication précédente,
**caractérisé en ce**
**que** les ouvertures (170 ; 220) sont disposées à équidistance le long d'une ligne hélicoïdale.

6. Procédé selon une des revendications précédentes,
**caractérisé en ce**
**que** les ouvertures (170 ; 220) sont
6.1 circulaires ; et/ou
6.2 carrés ; et/ou
6.3 rectangulaires ; et/ou
6.4 hexagonales ; et/ou
6.5 en forme d'étoile.

7. Procédé selon une des revendications précédentes,
**caractérisé en ce**
**que** le nombre de lignes hélicoïdales est déterminé au moyen d'une méthode itérative (500) ;
7.1 dans lequel les ouvertures (220) sont d'abord réparties sur N=2 lignes hélicoïdales avec une hauteur minimale h = π D tan(a),
7.2 où sin(a) = N cos(30°) ( d + s ) / ( π D ),
7.2.1 D désigne le diamètre intérieur de l'obturateur perforé (150 ; 200 ; 300),
7.2.2 d désigne le diamètre des ouvertures (220),
7.2.3. s est la largeur minimale de la traverse entre les ouvertures (220), et
7.2.4 h est la hauteur des lignes hélicoïdales après une révolution complète autour de la paroi intérieure de l'obturateur perforé ;
7.3 dans lequel le nombre d'ouvertures (220) sur chaque ligne hélicoïdale est d'abord donné par la valeur entière du rapport π D / ( d + s ) et
7.4 qui sera ensuite augmenté progressivement,
7.5 jusqu'à ce que la projection orthogonale de la position d'une ouverture sur l'une des lignes hélicoïdales tombe sur la ligne hélicoïdale la plus proche dans la région intermédiaire de deux ouvertures adjacentes (220) ;
7.5.1 dans lequel la région intermédiaire est définie par la distance de la projection aux ouvertures (220) étant au moins 30% de la distance des ouvertures (220) ;
7.6 où, par la suite, le nombre de lignes hélicoïdales N est augmenté de façon incrémentielle,
7.6.1 si la largeur des traverses ne respecte pas la valeur minimale prédéterminée, ou
7.6.2 le rapport maximal de deux largeurs de traverse entre des ouvertures adjacentes est supérieur à 1,5, et
7.6.3 les étapes 7.3 à 7.6 sont répétées jusqu'à ce que la largeur des traverses respecte la valeur minimale et que le rapport maximal soit supérieur ou égal à 1 et inférieur ou égal à 1,5.

8. Procédé selon une des revendications précédentes,
**caractérisé en ce**
**qu'**en outre, la surface totale maximale des ouvertures (170 ; 220) est prédéterminée comme condition aux limites.

9. Procédé selon la revendication 7,
**caractérisé en ce**
**que** les ouvertures (170 ; 220) à omettre sont déterminées sur les lignes hélicoïdales autour de la circonférence de l'obturateur perforé (150 ; 200 ; 300) à l'aide d'un procédé en boucle (600) ;
9.1 dans lequel le nombre maximum possible d'ouvertures (170 ; 220) autour de l'obturateur perforé (150, 200, 300) est déterminé selon la revendication 7 ;
9.2 dans lequel, à l'étape suivante, le nombre total d'ouvertures (170 ; 220) à omettre est déterminé ;
9.2.1 dans lequel le nombre d'ouvertures (170 ; 220) nécessaires pour obtenir une surface totale maximale prédéterminée des ouvertures (170 ; 220) est déterminé ; et
9.2.2 dans lequel ce nombre est soustrait du nombre maximum possible d'ouvertures (170 ; 220) autour de l'obturateur perforé (150, 200, 300) déterminé selon la revendication 7 ;
9.3 à l'aide de cette différence r, dans une boucle commençant à la Nième ligne hélicoïdale et se terminant à la première ligne hélicoïdale, on détermine maintenant le nombre d'ouvertures (170 ; 220) à omettre sur les différentes lignes hélicoïdales, où
9.3.1 affecter la valeur N à une variable de comptage i dans la première étape ; et
9.3.2 la valeur entière du rapport 3 r / ( 2 i - 2 ) est déterminée, qui est en outre diminuée de 1, et
9.3.3 puis en décrémentant r de cette valeur, et
9.3.4 en répétant la procédure pour la ligne hélicoïdale suivante, en s'assurant que
9.3.4.1 le nombre d'ouvertures (170 ; 220) à omettre n'augmente pas
9.3.4.2 ni n'est supérieur à r.

10. Obturateur perforé (150 ; 200 ; 300) pour une vanne de régulation (100) obtenu par le procédé selon une des revendications 1 à 9.

11. Obturateur perforé (150 ; 200 ; 300) pour une vanne de régulation (100),
dans lequel la vanne de régulation (100) est capable de commander l'écoulement d'un fluide ;
11.1 dans lequel l'obturateur perforé (150 ; 200 ; 300) est en forme de manchon ; et
11.2 ayant des ouvertures (170 ; 220) dans son enveloppe à travers lesquelles le fluide peut s'écouler ;
11.3 dans lequel les ouvertures (170 ; 220) sont disposées sur au moins une ligne hélicoïdale sur l'enveloppe de l'obturateur perforé (150 ; 200 ; 300) ;
11.4 dans lequel lesdites ouvertures (170 ; 220) et lesdites lignes hélicoïdales sont disposées de telle sorte
11.4.1 que le rapport entre la largeur maximale de la traverse et la largeur minimale de la traverse entre les ouvertures adjacentes (170 ; 220) est supérieur ou égal à 1 et inférieur ou égal à 1,5 ;
11.4.2 en ce que l'obturateur perforé (150 ; 200 ; 300) présente le nombre minimal de lignes hélicoïdales satisfaisant à la condition ci-dessus ;
11.5 dans lequel l'obturateur perforé (150 ; 200 ; 300) est conçu de telle manière qu'il respecte en outre les conditions limites suivantes :
11.5.1 un diamètre intérieur prédéterminé de l'obturateur perforé (150 ; 200 ; 300) ;
11.5.2 un diamètre prédéterminé des ouvertures (170 ; 220) ;
11.5.3 une largeur minimale de traverse entre les ouvertures (170 ; 220) ;
11.6 dans lequel des ouvertures (170 ; 220) sont omises, par lequel l'obturateur perforé (150 ; 200 ; 300) produit un parcours à pourcentage égal de la courbe caractéristique d'écoulement de la vanne de régulation (100).
